# EUROPEAN PATENT APPLICATION

(11) **EP 4 787 325 A1**
(43) Date of publication of application: **05.08.2026**
(21) Application number: 25382069.0
(22) Date of filing: 31.01.2025
(51) Int. Cl.: G06T 17/20, G06T 7/00

(54) **COMPLETION OF INTRA-ORALLY SCANNED DENTURE**

(71) Applicant: Movumtech, S.L., 15003 La Coruña (ES)
(72) Inventor: GAÑAN ONIEVA, Francisco Javier, 28006 Madrid (ES); DEL CACHO SALVADOR, Germán, 46000 Valencia (ES); PIEDRA CASCÓN, Wenceslao, 33004 Oviedo (ES); BURGOS-ARTIZZU, Xavier Paolo, 08037 Barcelona (ES)
(74) Representative: Elion IP, S.L.

(57) **Abstract**

A method for completion of intra-orally scanned denture. The method includes providing at least one boundary between gingiva and crown faces by processing a mesh representing at least part of segmented teeth and segmented gingiva of a person. The method also includes providing each tooth of the person with a complete crown boundary by determining at least part of a boundary between each tooth and the gingiva and identifying whether there is at least one occluded and/or missing surface with part of a boundary between the tooth and the gingiva missing, and estimating the part of the missing boundary. The method also includes providing a mesh for each tooth of the person based on both faces of the crown thereof and the complete crown boundary thereof.

## Description

### TECHNICAL FIELD

The present disclosure relates to the field of dentistry. More particularly, the present disclosure relates to methods, apparatuses and systems for, inter alia, improving segmented teeth following an intra-oral scan for scanning the denture of a person.

### BACKGROUND

The starting point of many multidisciplinary dental treatment methods is a multidimensional, e.g., 2D, 3D, 4D, etc., determination of the inside of the mouth of the person that is going to be the subject of a given method. The correct determination of the mouth and teeth is of utmost importance because the dental treatment will be based on the particular features of the person to determine a dental plan, and how the different crowns, teeth, gums, etc., might change as a result of the dental plan.

Although intraoral scans have been used for a number of years now, they still are unable to provide sufficient data for a correct determination of the inside of the mouth. On the one hand, the care and experience of the operator conducting the intraoral scan plays a role on the detail level of the data provided. And on the other hand, even if the operator conducts the intraoral scan correctly, there are a number of factors driving the resulting data. By way of example, when the interproximal space between two crowns is narrow, occlusal interference may prevent the complete capture of the surfaces of the contacting crowns. By way of another example, the presence of brackets or retainers on the teeth can also obstruct the full capture of these surfaces. Likewise, the conditions under which the scan is performed may result in meshes with incomplete crowns as the dental crows are not fully represented.

The devices used in intraoral scans have limited capacity to scan certain portions within the mouth of the person, thereby yielding a digital model with meshes for the different crowns not enabling full determination of the inside of the mouth of the person. Improvement of the digital model provided in intraoral scans would be convenient.

### SUMMARY

A first aspect relates to a computer-implemented method. The method comprises providing at least one boundary between gingiva and crown faces by processing a mesh of a model that represents at least part of both segmented teeth and at least part of segmented gingiva of a person. The method also comprises providing each tooth of the person with a complete crown boundary in the mesh. The provision of the complete crown boundaries comprises determining at least part of a boundary between each tooth and the gingiva and identifying, for the respective tooth, whether there is at least one occluded or missing surface with part of a boundary between the tooth and the gingiva missing. And the provision of the complete crown boundaries also comprises estimating, for each tooth having the at least one occluded or missing surface with part of the missing boundary, the part of the missing boundary. The method also comprises providing a mesh for each tooth of the person based on both faces of the crown thereof and the complete crown boundary thereof. The mesh may be provided in the same model, e.g., updating the previous mesh, and/or in model different from the original model processed.

The model with the mesh may be obtained from scanning a mouth of the person with at least one of, for example, a facial scanner, an intraoral scanner, a cone beam computed tomography (CBCT), or another type of scanning suitable for determining denture anatomy, preferably with below millimeter accuracies. That is to say, the model is preferably obtained from an intraoral scan. The model may include part or a totality of the mouth of the person; for example, the model may relate to a maxillary scan or mandibular scan.

The mesh may have faces based on any type of polygon, such as triangles or rectangles. The faces of the mesh may be transformed from one type of polygon to another, if needed, for processing purposes at any stage of the method, for example to reduce the processing power needed to conduct processing, to adapt the accuracy of the processing, etc.

The model includes a semantical segmentation of the teeth and the gingiva or non-crown areas. The model may include further semantical segmentation, such as, for example, one or more of: brackets, scan bodies, interproximal surfaces, etc.

The provision of the at least one boundary between gingiva and crown faces refines existing boundaries and avoid crown concavities and/or skirts, which may exist due to the scan, to be on the boundary between teeth and gingiva. To this end, the processing may identify faces labeled as crowns that are adjacent to faces labeled as gingiva to find a region therebetween. The at least one boundary is preferably assigned to a gingiva class of the segmentation and/or to at least one gingiva face.

Crown boundaries are then determined so as to establish the whole region thereof so that the resulting mesh will include complete boundaries of all crowns. The part of the crown boundaries that is available in the mesh is determined together with boundary parts that are missing between the tooth and the gingiva. The missing boundary parts are due to the limitations of the scanning process and/or to boundaries previously removed. Any such missing boundary parts are then estimated to establish what is the actual boundary between the respective tooth and the gingiva, which on many occasions is considerably different than the boundary as represented by the mesh of the original model.

Meshes of teeth may be outputted by the method for further processing, for instance to conduct a dental treatment requiring an accurate definition of the denture of the person.

In some embodiments, estimating the part of the missing boundary comprises providing a directed graph with a point per face of a portion at an end of the respective crown and a point per face of a portion of a gingiva adjacent to the respective crown, Each point per face of the portion of the crown is connected to a nearest neighboring point of a face of the crown or gingiva via a directed edge. In some embodiments, the point per face of the portion of the crown and/or the portion of the gingiva is a barycenter of the respective face.

The directed graph is one possible technique for estimating position information establishing the missing boundary, especially with respect to a possible location of the boundary itself. To this end, two connected points in the directed graph do not point each other reciprocally. There may be, and in many embodiments there is, some free surface or volume between the missing boundary and the rest of the crown that is not misrepresented, whereas the remaining portion is completed considering the directed graph having as nodes points of faces at ends of the crowns, i.e., boundary faces of the crown, and points of faces of the gingiva proximate to the faces at ends of the crowns, i.e., boundary faces of the gingiva.

In some embodiments, estimation the part of the missing boundary also comprises smoothing the directed graph at nodes corresponding to a non-visible boundary with a predetermined smoothing process.

A smoothed directed graph improves the shape of the missing boundary, thereby making the resulting mesh more accurate.

A predetermined smoothing process may comprise keeping nodes of a visible boundary of the directed graph fixed, and adjusting the position information of one or more remaining nodes in such a way that a more regular and curvilinear contour is obtained. The output is an updated set of points representing the smoothed crown boundary. By way of example, such process may involve defining a linear system based on a Laplacian matrix of the graph to compute new positions of the free nodes.

In some embodiments, providing the at least one boundary comprises: providing at least one boundary face by processing the mesh to identify a boundary between gingiva and crown faces; providing at least one contour face by processing the mesh to identify crown faces with a curvature greater than a predetermined curvature threshold; and providing at least one gingiva face by intersecting the at least one boundary face and the at least one contour face.

Identified boundary and contour faces may be used to provide an enhanced gingiva boundary, e.g., at least one gingiva face assignable to the segmented gingiva.

The contour face or faces preferably require a certain relevant curvature indicative of a proximate geometric edge. That is to say, the contour face or faces intended to be identified are faces with some degree of curvature, the degree of curvature being configurable, to assist in the avoidance of concavities and/or skirts in the boundaries.

By way of example, the contour face or faces may be established by identifying mesh faces with a discrete mean curvature exceeding a predetermined curvature threshold, or even be the mesh faces with a highest discrete mean curvature. For example, a technique such as that described in Mark Meyer, et. al., "Discrete Differential-Geometry Operators for Triangulated 2-Manifold," Visualization and Mathematics III, 2023, may be used for the identification and provision of the contour face or faces.

The intersection of faces provides boundary faces between crown and gingiva exhibiting some or significant discrete curvature. Such boundary faces may be assigned to a gingiva class of the segmentation.

In some embodiments, providing the at least one boundary face further comprises dilating the identified boundary between the gingiva and the crown faces a certain depth, configurable by an input parameter. This may also improve the resulting meshes as some parts not directly on the boundary between gingiva and crowns could also be poorly scanned. Accordingly, by dilating the at least one boundary face, such part can be improved as part of the method.

In some embodiments, providing the mesh per tooth comprises: connecting at least one point per face at an end of the crown with either an adjacent point per face at the end of the crown or the estimated part of the missing boundary to form a closed boundary; providing a point cloud for each tooth with at least one point per face of the crown and covering at least part of the closed boundary; and providing the mesh for each tooth based on the respective point cloud. In some embodiments, the at least one point per face of the crown comprises a barycenter of the face.

The point cloud is provided with points in each face of the crown, including any face or faces that may be generated on the part of the missing boundary. Concerning the latter, the closed boundary formed by the interconnection of points of the crown and the estimated part of the missing boundary serves for defining and generating faces on the missing part. Therefore, point or points may also be considered from such generated faces for providing the point cloud.

The point cloud defines a shape of the respective tooth, which may then be used for providing the mesh for the tooth.

Barycenters are a possible type of point that provides regularity in the shape of the respective tooth since all points of the point cloud are defined by way of barycenters.

In some embodiments, providing the mesh for each tooth of the person further comprises processing the point cloud with a neural network configured to provide crown point cloud with points on the part of the missing boundary.

The neural network may be, for example, a point cloud autoencoder based on transformer architecture, which may be configured and trained to receive at its input an incomplete point cloud and provide as an output a complete point cloud. By way of example, the neural network may be AdaPoinTr as described in Xumin Yu, et. al., "AdaPoinTr: Diverse Point Cloud Completion with Adaptive Geometry-Aware Transformers," arXiv:2301.04545.

The input of the neural network thus takes a point cloud, for example a point cloud of 4,096 vertices (other number of vertices is possible as well, it will be noted that reducing or increasing the number of vertices will reduce or increase the accuracy of the result at the expense of lower or greater processing power and memory requirements), that may be randomly cropped into a number of patches, e.g., one to ten patches. The patches may have, for example, between 10% and 50% of the vertices of the crowns.

In cases in which the mesh of the crown has more faces than those supported by the input of the neural network, a reduction in the number of faces is first conducted on the mesh of the crown. By the same token, when the mesh of the crown has fewer faces than those supported by the input of the neural network, an increase in the number of faces is first conducted, for example by way of interpolation.

The output of the neural network is a point cloud, for example a point cloud of 4,096 vertices (more or fewer vertices are possible as well), that includes vertices that were hidden or cropped in the input.

The neural network may be trained, for example, with a training set of 800 complete crowns, a validation set of 200 complete crowns, and a test set of 200 complete crowns.

Hyperparameters of the neural network may be configured and adjusted based on experimental tests.

Points or faces of the crown missing in the point cloud or mesh in a missing part may be supplemented by the resulting point cloud.

In some embodiments, providing the mesh for each tooth of the person further comprises centering the point cloud based on a mean value of all points of the point cloud and scaling each point of the point cloud for normalized representation by applying a scaling factor based on a mean norm of the points of the point cloud. Also, providing the mesh per tooth further comprises descaling the crown point cloud with greater number of points by applying an inverse of the scaling factor and decentering the crown point cloud with greater number of points based on the mean value used for centering the point cloud. In these cases, the point cloud processed with the neural network is the scaled point cloud. Also, the mesh provided for each tooth is based on the respective crown point cloud with points on the part of the missing boundary after descaling and decentering.

Centering and scaling operations, together with subsequent inverse operations, are convenient in some cases to increase the accuracy of the resulting point cloud.

In some cases, the mean norm is a mean Euclidean norm.

In some embodiments, providing the mesh for each tooth of the person further comprises processing the point cloud to provide faces between different points, thereby providing the mesh. In some embodiments, the provision of faces is conducted such that a pontic shape is provided.

The shape of the resulting mesh may be improved by conducting a suitable smoothing process such as, for example, a Screened Poisson Surface Reconstruction process.

The smoothing process used may have one or more parameters thereof adjusted to provide a pontic shape. By way of example, when the process is Screened Poisson Surface Reconstruction process, a scale factor parameter may be configured to obtain the crown with the pontic shape.

In some embodiments, the method further comprising aligning the mesh with the removed boundary faces with a mesh of a model of a reference scan, namely a reference mesh.

Processing of the mesh for providing complete crown boundaries may be simplified by first aligning the mesh with a reference mesh. Ulteriorly to the processing, the alignment may be undone by applying an operation that is the inverse of that for the alignment, such as an affine transformation.

In some embodiments, aligning the mesh comprises: computing centroids of at least the crowns in common between the mesh with the removed boundary faces and the reference mesh; and computing a transformation matrix for aligning the centroids of the mesh with the removed boundary faces with the centroids of the reference mesh.

The transformation matrix rotates and translates the mesh. Application of the transformation matrix in an automatic form at least requires the meshes to have three or more crowns in common. For fewer crowns in common, preferably a user is prompted to select keypoints for aligning the two meshes.

In some embodiments, the method also comprises removing and/or narrowing boundary faces from the mesh in which the boundary faces are between adjacent teeth. This may be conducted, in particular, when the model does not include segmented interproximal surfaces between adjacent teeth, i.e., interproximal surfaces are not part of the segmentation in the model.

In addition to the removal and/or narrowing of the boundary faces between adjacent teeth, in some embodiments faces neighboring the removed and/or narrowed boundary faces are also removed and/or narrowed. The distance of neighboring faces may configured to remove and/or narrow adjacent faces and, optionally, faces beyond adjacent ones. In some cases, the user is prompted to confirm removal and/or narrowing of neighboring faces. The removal and/or narrowing of neighboring and, possibly, further faces may improve removal and/or narrowing of interproximal surfaces. Surfaces taking the place of the removed and/or narrowed interproximal surfaces are provided later as part of the method upon conducting an estimation.

In some embodiments, providing the mesh for each tooth of the person based on the faces of the crown thereof and the complete crown boundary thereof comprises updating the mesh as provided in the model by at least adding faces in the at least one occluded or missing surface of the respective tooth. In some embodiments, updating the mesh also comprises adding faces in the gingiva.

Whereas in some cases a new model with meshes for the teeth is provided for subsequent processing, which alters a topology of the mesh, in some cases the original model is updated to include additional faces not present in the original model. This way, in turn, allows preserving the original mesh, or at least part thereof (as reconstructed areas become a new part of the mesh).

In some embodiments, the method further comprises removing portions of adjacent teeth that are overlapping by processing each pair of adjacent segmented teeth to subtract, from a mesh of one tooth of the pair of teeth, an overlapping portion between the pair of teeth.

The removal does not take away the overlapped portions from the whole model, but just from the mesh of one of the teeth. That is to say, the overlapped portion is present in the mesh of one tooth but not in the mesh of the other tooth.

Owing to the removal of overlapping portions, there is a clear definition of each and every tooth, while preserving the anatomical structure and avoiding inconsistencies in reconstructed dental arches.

In some embodiments, the method further comprises adjusting the segmented gingiva by subtracting from a mesh thereof one or more meshes of segmented teeth.

As the meshes are subtracted one from the other, the gingiva features recesses at the portions thereof where teeth are to be arranged, thereby providing a more accurate representation of the gingiva.

In some embodiments, if the denture model contains a cast or base, the method further comprises estimating an alveolar model associated with each reconstructed tooth.

The alveolar model, in its simplest form, consists of an estimation of the teeth roots and is computed as a mesh face extrusion from the base of the teeth until the outer part of the cast, preferably following the teeth barycenter and principal orientation. The specific size of the extruded region is configurable. Alveolar models may be as described in, e.g,: Azpiazu-Flores, et. al., "Trueness of the apical and middle root portion segments of 3D-printed removable die and alveolar cast designs manufactured using stereolithographic 3D printing," Journal of prosthodontics: official journal of the American College of Prosthodontists, 2024; Azpiazu-Flores, et. al., "Positional trueness of three removable die designs with different root geometries manufactured using stereolithographic 3D printing", The Journal of prosthetic dentistry, 2025; Henarejos-Domingo, et. al., "The digital alveolar cast: A revised approach to an old concept," The Journal of prosthetic dentistry, 2022.

In some embodiments, the model is of a maxillary scan.

In some embodiments, the model is of a mandibular scan.

In some embodiments, the model is of a full mouth scan.

In some embodiments, the method further comprises receiving the model for processing.

In some embodiments, the method further comprises scanning inside a mouth of a person with a scanner to provide the model.

In some embodiments, the method further comprises processing the mesh of the model to segment the teeth and gingiva.

The segmentation may be conducted in an automated manner with a digital segmentation process, with or without assistance of a user (e.g., selecting teeth/gingiva, reviewing the segmentation, etc.), or manually, in which case the user is prompted to select the different segmentation regions.

In some embodiments, the method further comprises conducting a dental treatment process based on the provided mesh for each tooth of the person.

The dental treatment process may be, e.g., orthodontic treatment, guided surgery, virtual extraction, veneers, full coverage crowns (complete crown coverage), temporary dental restoration, partial restoration (e.g., inlays, onlays, vonlays), implant-supported restorations, laboratory procedure requiring an alveolar model, or a combination thereof of two or more of any of such processes.

A second aspect relates to a method of manufacturing one or more dental objects. The method comprises running a method as described in the first aspect; providing data for manufacturing the one or more dental objects as part of the dental treatment process; and manufacturing the one or more dental objects at least based on the provided data by additive or subtractive manufacturing.

A third aspect relates to a dental object obtained or obtainable with a method as described in the second aspect.

A fourth aspect relates to a use of a method as described in the first aspect for a dental treatment process and/or manufacturing of one or more dental objects.

A fifth aspect relates to a computing device or system (e.g., a data processing device or a data processing system) comprising means for carrying out a method as described in the first aspect.

The means of the computing device or system include, for example, at least one processing device and at least one memory. The means may also include at least one data communications module for receiving and/or transmitting data.

In some embodiments, the computing device or system comprises same or additional means for conducting steps according to embodiments of the first aspect.

A sixth aspect relates to a computer program comprising instructions which, when the program is executed by at least one computing device, cause the at least one computing device to carry out a method as described in the first aspect.

A seventh aspect relates to a computer-readable non-transitory storage medium comprising instructions which, when executed by at least one computing device, cause the at least one computing device to carry out a method as described in the first aspect.

An eighth aspect relates to a data carrier signal carrying a computer program as described in the sixth aspect.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows a model of part of the inside of a mouth of a person obtained from an intraoral scan.
Figure 2 shows the model of Figure 1 where missing surfaces of the intraoral scan have been estimated with a method in accordance with some embodiments.
Figure 3 shows another model of part of the inside of a mouth of a person obtained from an intraoral scan.
Figure 4 shows the model of Figure 3 where missing surfaces of the intraoral scan have been estimated with a method in accordance with some embodiments.
Figures 5A and 5B show a model with segmented teeth.
Figures 6A to 6D show a model with an example of provision of boundaries between gingiva and crown faces in accordance with some embodiments.
Figures 7A and 7B show a model with detected and removed interproximal surfaces in accordance with some embodiments.
Figure 8 shows a model aligned with respect to a reference model.
Figures 9A to 9E show detection and estimation of a complete crown boundary in accordance with some embodiments.
Figure 10 shows a point cloud of a tooth with an estimated complete crown boundary in accordance with some embodiments.
Figures 11A and 11B show a point cloud of a tooth filling the estimated missing part of the complete crown boundary in accordance with some embodiments.
Figures 12A to 12C show a pontic model of a crown generated with a method in accordance with some embodiments.
Figure 13 shows a model of adjacent teeth with overlapping regions.
Figure 14 shows part of the model of Figure 13 with a tooth isolated from the adjacent tooth with the respective region that was overlapped in Figure 13, obtained with a method in accordance with some embodiments.
Figure 15 shows a model of a set of teeth for reconstructing missing gingiva with a method in accordance with some embodiments.
Figure 16 shows a model of a gingiva yet to be reconstructed according to the set of teeth.
Figure 17 shows a model of a gingiva reconstructed with a method in accordance with some embodiments.
Figure 18 shows at least one model of at least part of a mouth with a pontic model as provided by a method in accordance with some embodiments.
Figure 19 shows at least one model of at least part of a mouth without a pontic model as provided by a method in accordance with some embodiments.
Figure 20 shows a method in accordance with some embodiments.

### DETAILED DESCRIPTION

Further advantages in addition to the ones described above will also become apparent from the description of the drawings.

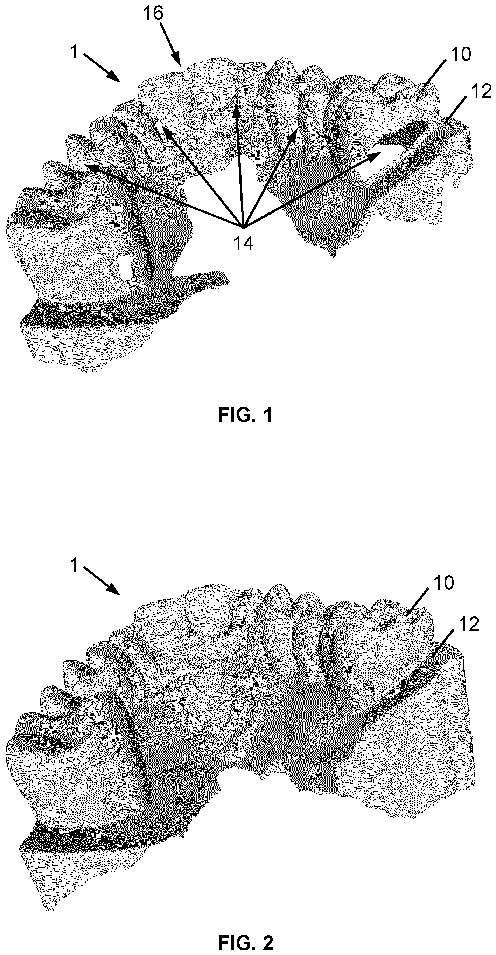

Figure 1 shows a model 1 of part of the inside of a mouth of a person obtained from an intraoral scan. The model 1 has a mesh (not shown) with polygons representing a denture of the person, including teeth 10 and gingiva 12.

Due to limitations of the intraoral scan, occluded parts 16 and/or missing parts of the teeth 10 may exist in the mesh owing to the non-determination of the presence and shape of the respective parts of the teeth 10. Occluded parts 16 or portions may exist, in particular, when two adjacent features within the mouth of the person are so close that there is little or no gap between them, and the intraoral scan cannot determine the actual shape of the occluded part, thereby potentially representing a bulged or receded area that is actually not present in the denture. Missing parts 14 or portions may exist, in particular, when features within the mouth of the person are positioned in a particular way or have a particular shape that, owing to limited access and lighting, if any, of the intraoral scan technology, scanning thereof is not possible, or not accurately at least.

Although not illustrated, a similar problem may sometimes occur with respect to gingiva whereby one or more parts thereof may appear missing, bulged and/or receded.

Figure 2 shows the model 1 of Figure 1 after carrying out a method in accordance with embodiments. The method causes the generation or improvement of parts that, in the original model and the mesh thereof, are not present or are not accurately represented because of limited scanning capabilities of scanner, due to the scanner itself and/or the limited access and volume within the mouth. As it can be seen by comparing Figures 1 and 2, occluded and/or missing parts 16, 14 in Figure 1 appear filled with polygons in the mesh of the model 1 of Figure 2.

The resulting model 1 thus has a mesh with denture features superior than those of the original model 1, e.g., the model 1 of Figure 1, thereby completing the intraoral scan.

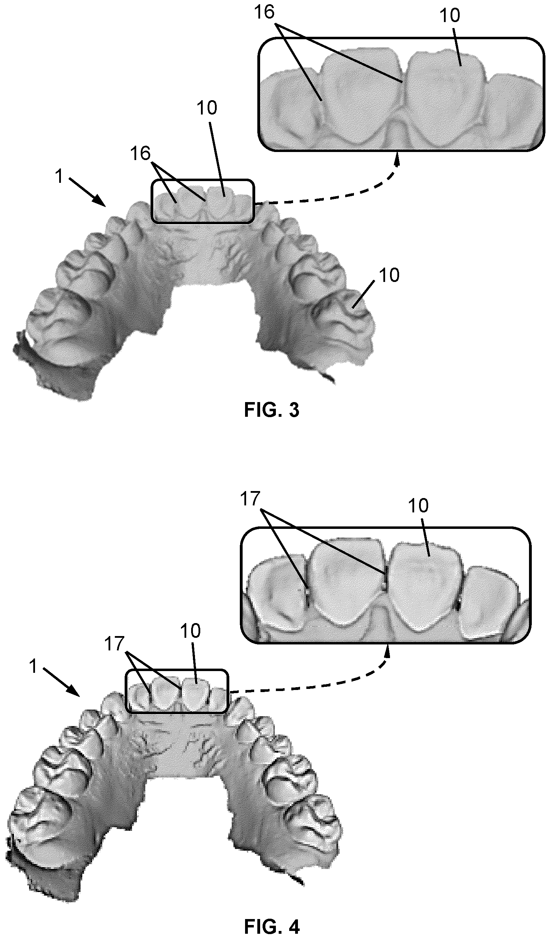

Figure 3 shows another model 1 of part of the inside of a mouth of a person obtained from an intraoral scan. The mesh of the model 1 includes, in this case, occluded surfaces 16 between adjacent teeth 10, which correspond to interproximal surfaces.

Surfaces between adjacent teeth 10 are especially prone to misrepresentation because of the limited gaps in the region that make the scanning more difficult. When there is a greater gap surrounding dental features, the intraoral scanner tends to perform a better scan and, thus, mesh in the model provided.

Figure 4 shows the model of Figure 3 after carrying out a method in accordance with embodiments. The method estimates the misrepresented surfaces.

The estimated surfaces may, furthermore, be assigned to one of the different classes of the semantic segmentation of the model, thereby properly identifying to what dental features the surfaces belong. This is of particular importance because the specialists in charge of the dental treatment and any digital processing techniques suitable for providing a dental treatment benefit of knowing what surfaces and volume belong to which dental feature, i.e., tooth, gingiva, bracket, etc. As the segmentation is usually conducted such that each tooth, for example, is individually segmented, the surfaces and volume are associated with the respective segmented tooth, thereby making identification of all the characteristics of the tooth easier and readily available for subsequent processing.

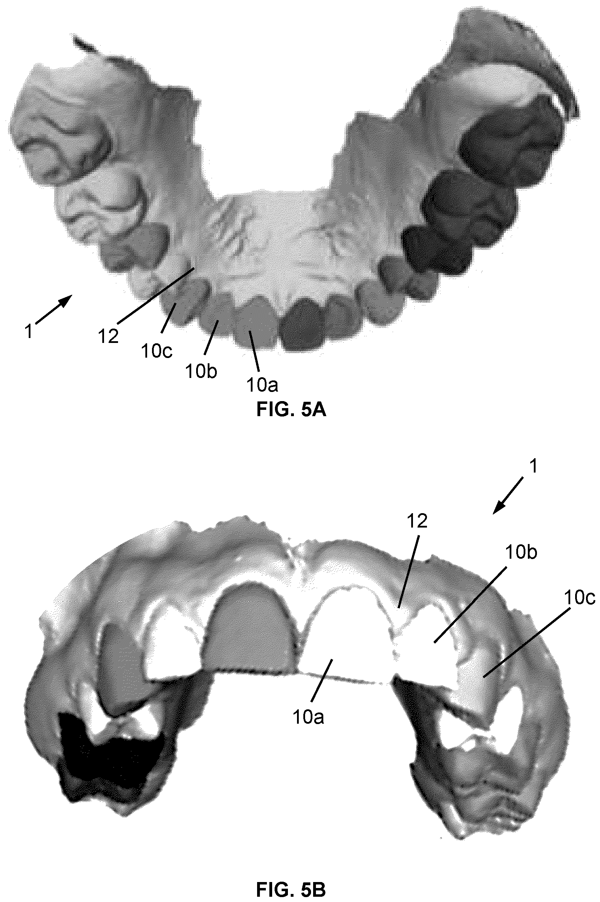

Figures 5A and 5B show a model 1 with a mesh having at least segmented teeth 10a-10c and gingiva 12, where for the sake of clarity only few teeth have been identified with a reference sign, yet some or, preferably, all teeth are respectively segmented.

In some embodiments, a model to be processed for completion of a scanned denture may have a semantic segmentation already performed. In some other embodiments, a semantic segmentation is performed on the model as part of the method.

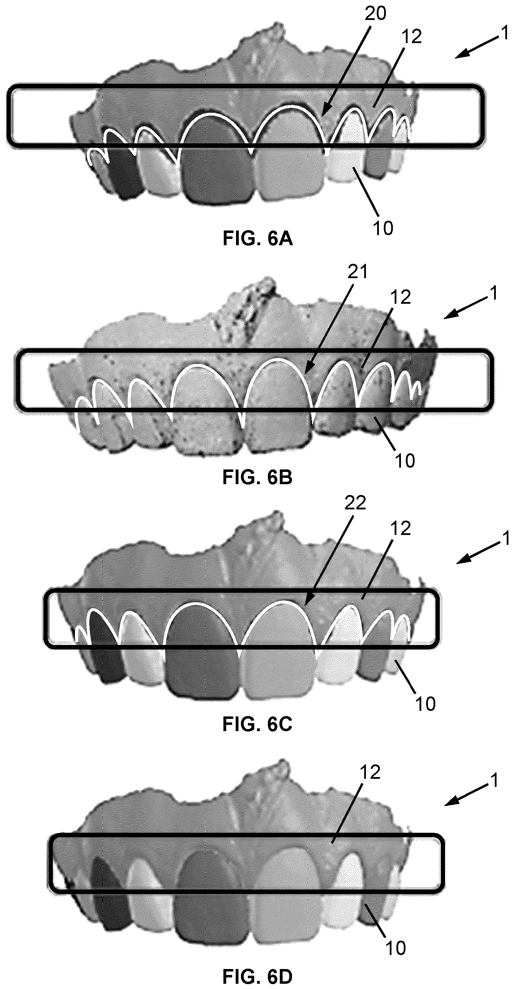

Figure 6A shows a model 1 in which segmented teeth 10 and gingiva 12 of a person are represented on the mesh.

Digital processing of the mesh is conducted to provide one or more boundaries 20 (shown with a white line for the sake of clarity only) between gingiva and crown faces. To this end, the faces of the different segmented classes (i.e., gingiva and teeth) that are adjacent, and which may be in contact or not, are detected to derive one or more boundaries.

The boundary or boundaries 20 may be assigned to the gingiva segmentation class for example, and/or one or more boundary faces may be derived from the digital processing that may then be added to the segmented gingiva, for example.

The boundary or boundaries 20 assigned to the gingiva 12 allow the provision of a mesh with a neater and more accurate differentiation between gingiva 12 and teeth 10, similar to, for example, the mesh of the model 1 of Figure 6D.

In some embodiments, in addition to determining the one or more boundaries 20, one or more contour faces 21 (shown with a white line for the sake of clarity only), like in Figure 6B, are provided. The crown faces are digitally processed to identify faces with a considerable curvature according to a curvature threshold set to that end. In these embodiments, the digital processing of Figures 6C and 6D is also conducted.

With regards to Figure 6C, the boundaries 20 provided by the digital processing described in relation to Figure 6A are intersected with the contour faces 21 provided by the digital processing described in relation to Figure 6B, which results in the provision of one or more gingiva faces 22 (shown with a white line for the sake of clarity only). The gingiva faces 22 provided are assigned to the gingiva class, thereby providing a model 1 with a mesh with better differentiation between gingiva 12 and teeth 10, like in Figure 6D.

When the processing of Figures 6B and 6C is conducted, typically the resulting differentiation between gingiva 12 and teeth 10 is more accurate than just providing the one or more boundaries 20 of Figure 6A.

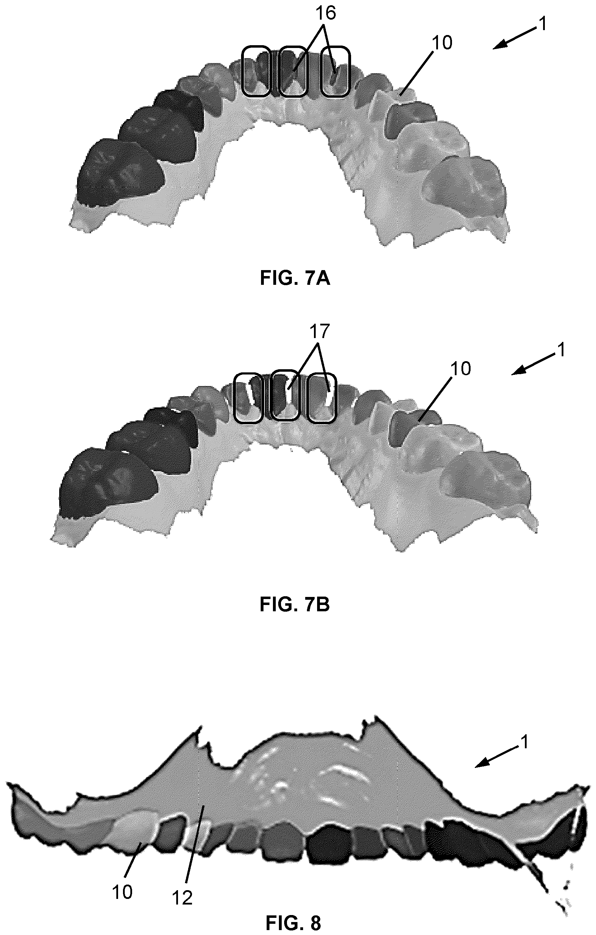

Figure 7A shows a model 1 in which the mesh represents, in addition to, e.g., teeth 10 and gingiva, detected interproximal surfaces 16, i.e., occluded surfaces.

As it can be appreciated from Figure 7A, the interproximal surfaces 16 could be identified as belonging to one tooth or another, or even to gingiva or to a tooth, which worsens the denture represented, and even more so from a segmentation standpoint. The latter case, that is to say, interproximal surfaces between gingiva and teeth are addressed as described in relation to the different embodiments of Figures 6A to 6D.

In some cases, the interproximal surfaces 16 are already segmented and belong to a separate class, thereby at least making identification thereof possible for processing it in one way or another, or even removing it. At least when this is not the case, as part of the processing conducted in some embodiments, faces of one tooth that are close or adjacent to faces of a neighboring tooth are identified and removed. In some cases, the removal may be combined with narrowing of faces, or the faces are just narrowed instead of removed. Upon removal and/or narrowing, the interproximal surfaces leave a void volume 17 on the mesh that will subsequently be completed.

Figure 8 shows a model 1 aligned with respect to a reference model.

The reference model may be any suitable for digital processing thereof, especially for any processing to be conducted on the model 1. In this example, the reference model has a widened shape with a depth dimension (ranging between the back of the denture or mouth, and the front of the denture or mouth) reduced and a width dimension (ranging between one side of the denture or mouth, and the other side of the denture or mouth) increased, thereby effectively reducing the overall volume of the model. However, any reference model may be suitable, not necessarily having a reduced depth and/or increased with.

A transformation matrix may be calculated to align the mesh of a model 1 with the mesh of the reference model. The alignment provided by the transformation matrix results in rotation and/or translation of features of the mesh.

By way of example, the transformation, which is preferably applied without reflection, is calculated by solving a constrained Procrustes problem. Such problem may be solved, for example but without limitation, with the Kabsch-Umeyama technique, that may also be extended to include translation.

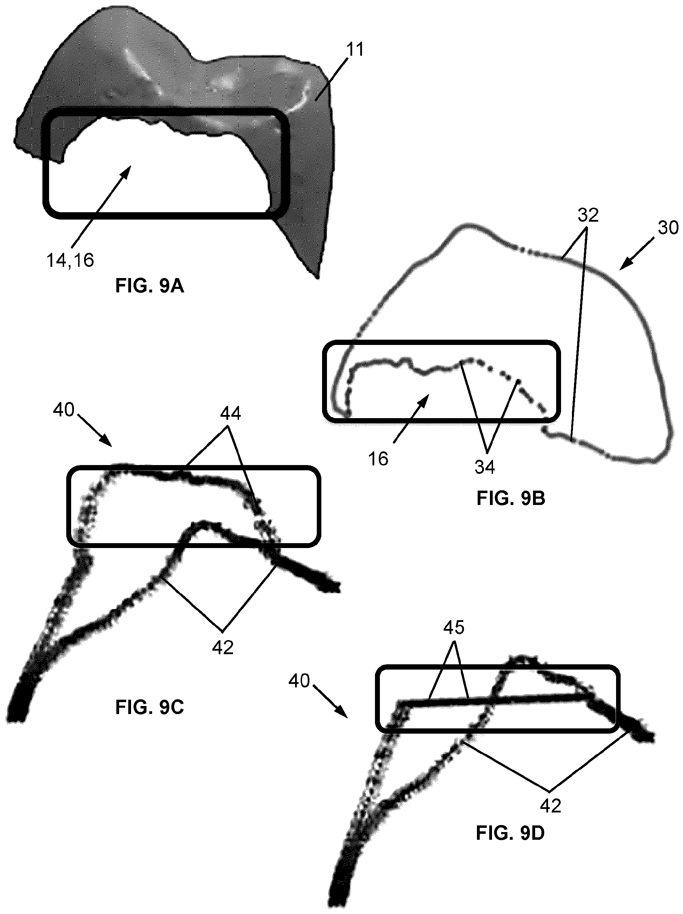

Figure 9A shows a crown of a tooth that is part of the mesh of a model. The crown was not accurately scanned, consequently having a occluded and/or missing surface 14, 16. Accordingly, the boundary of the crown is either incomplete or not accurate as it delimits the surface of the crown actually scanned.

In order to estimate the boundary 30 of the crown, in Figure 9B a point 32, 34 per border face of the crown as represented in the mesh is determined. For example, each point 32, 34 may be a center of the respective face at the border of the crown. In the part of the occluded and/or missing surface 16, 14, points 34 are not actually representative of the actual boundary of the crown, whereas points 32 elsewhere are representative of the actual boundary of the crown.

When the missing surface 14 is not close to an end of the crown, the completion thereof is easier as the different surfaces surrounding the missing surface 14 are representative of the faces missing. By contrast, when the crown features occluded surfaces 16, determination of the actual shape of the crown is more difficult as there are no surrounding faces of the crown that may assist to this end. A directed graph 40 with the points 34 of the occluded surface 16 and points per faces of the adjacent gingiva is constructed. The directed graph 40 is constructed by connecting points 44 of the occluded surface 16 to other points 44 thereof or points 42 of the gingiva so as to form a closed boundary, thereby providing a directed graph 40 of the crown and gingiva boundaries as shown in Figure 9C.

In some embodiments, a smoothing of the directed graph 40 is conducted, which may yield a result such as that illustrated in Figure 9D, causing a more regular set of points 45 (i.e., nodes of the directed graph 40) in the part of the occluded surface 16.

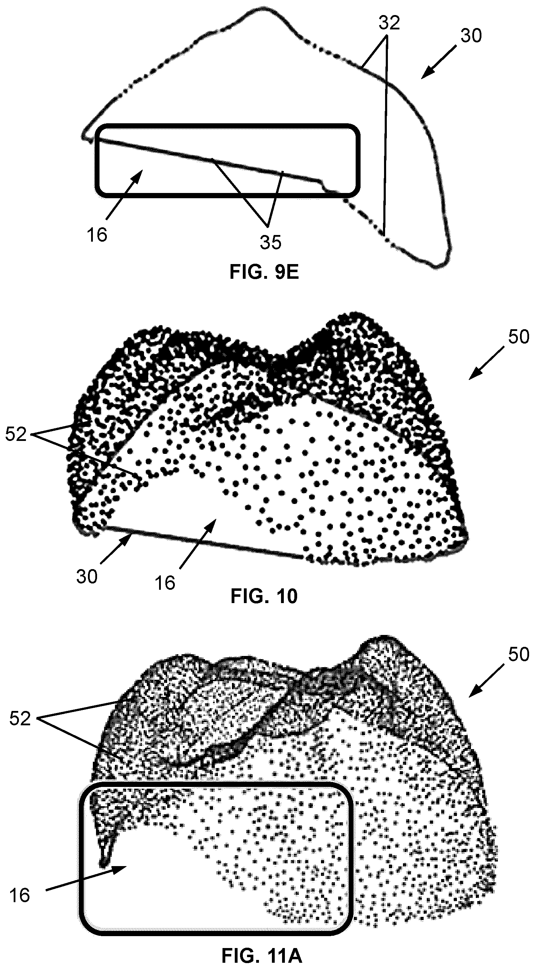

Figure 9E shows an estimated boundary 30 of the crown, obtained from the directed graph 40, smoothed or not. In this example, the boundary 30 features a smoothed boundary part 35 on the occluded surface 16.

Figure 10 shows a point cloud 50 of a tooth with an estimated complete crown boundary 30 in accordance with some embodiments.

The point cloud 50 has points 52 according to faces of the tooth as represented in the mesh of a model. Owing to occluded and/or missing surfaces, such as the occluded surface 16, the point cloud 50 is not provided with points in at least a region of the tooth.

Completion of the point cloud 50 in terms of points in such occluded and/or missing surfaces may be conducted with the method in some embodiments based on the estimated crown boundary 30.

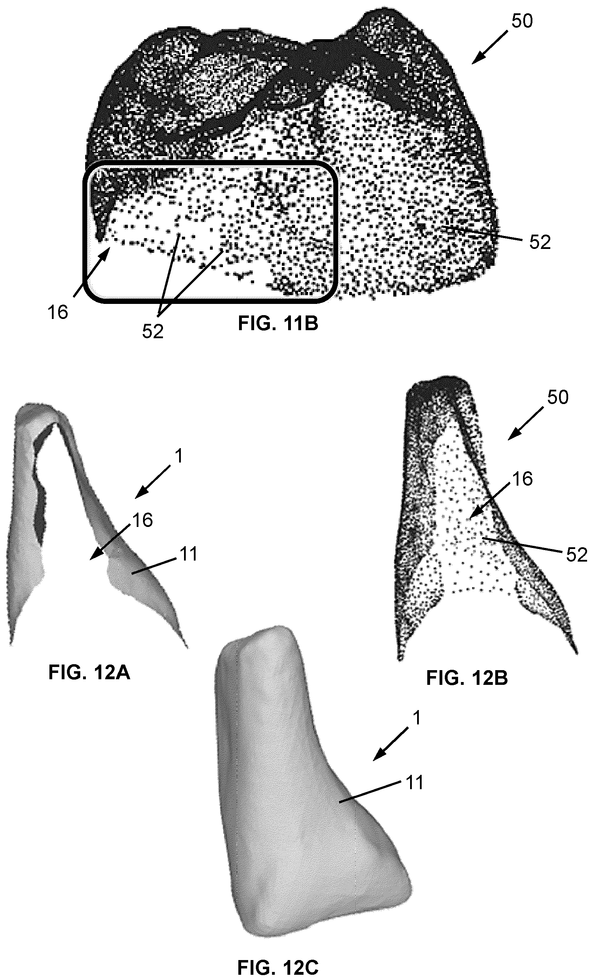

Figures 11A and 11B show a point cloud 50 of a tooth filling the estimated missing part of the crown boundary based on an estimated crown boundary, such as, for instance, the boundary of Figures 9E and 10. in accordance with some embodiments.

The point cloud 50 may be digitally processed so as to estimate faces (not illustrated) between different points of the point cloud 50 and the boundary of the crown (not illustrated) if an estimation of points is not conducted directly, i.e., without estimation of faces first.

Upon estimating faces in the occluded surface 16, one or more points in said surface 16 may be provided for completion of the point cloud 50, for example at least one point per face, thereby providing a point cloud 50 as that illustrated in Figure 11B.

In some embodiments, the digital processing of the point cloud 50 is based on a neural network configured to provide point clouds with points throughout a given region that may be delimited by an estimated crown boundary.

Figure 12A illustrates a partially scanned crown 11 as represented in a model 1. The crown is partially scanned in the sense that there is at least one missing and/or occluded surface 16.

Figure 12B illustrates the provision of a point cloud 50 with points 52 also in the missing and/or occluded surface 16, for example following the procedure described with reference to the previous Figures.

Figure 12C illustrates the transformation of the resulting point cloud 50 into the corresponding mesh of the crown 11 that is closed in a smooth, pontic shape.

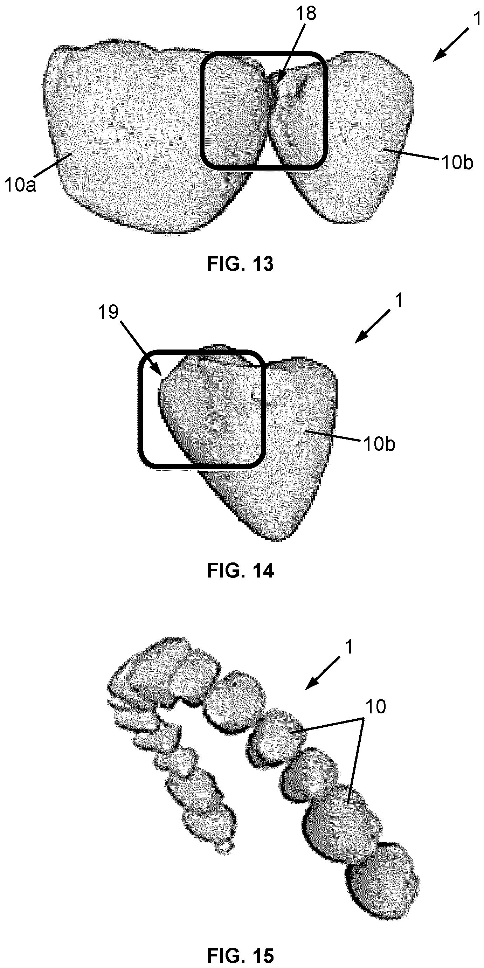

Figure 13 shows a model 1 of adjacent teeth 10a, 10b with overlapping regions 18.

The teeth 10a, 10b may be overlapping already in the model 1 provided as a result of the intraoral scanning process, or as the teeth 10a, 10b are completed upon carrying out the method of the present disclosure.

Removing such overlapped regions 18 is convenient for accurate definition of all teeth. The removal may yield, for example, a segmented teeth like tooth 10b of Figure 14 having the overlapping region removed and be provided, in its place, with faces 19 associated with the tooth 10b itself.

To this end, each pair of adjacent teeth are digitally processed such that the overlapping region 18 is subtracted from one of the teeth 10a, 10b. Namely, the mesh of one the teeth is modified such that the overlapping region 18 is removed, but kept in the mesh of the other one of the teeth. By way of example, a Boolean difference may be applied to remove, from the mesh of one of the teeth, the intersecting volumes of, e.g., an anterior tooth 10a and, e.g., a posterior tooth 10b.

Figure 15 shows a model 1 of a set of teeth 10 that enables reconstruction of occluded surfaces in gingiva represented in a mesh of a model. In particular, gingiva may be provided or reconstructed in the space between two crowns. The resulting gingiva are anatomically accurate and seamlessly integrated with the reconstructed crowns.

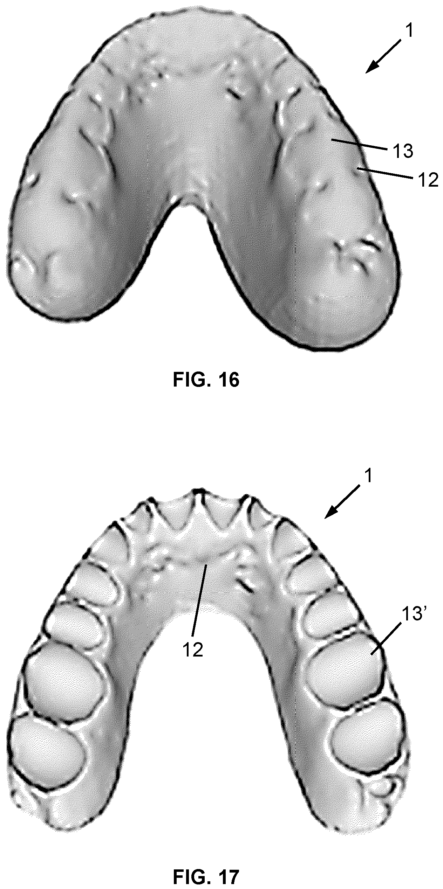

Once one or more meshes of a set of teeth 10 are available, for example segmented teeth completed in the way previously described, and a mesh of a gingiva 12 is also available, such as that of Figure 16, the process of reconstructing the gingiva 12 may be conducted as part of the method.

The gingiva 12 has regions 13, where teeth are typically located, that have diverse shapes not representing the actual gingiva 12.

A closed mesh of the gingiva 12 is provided with any suitable technique, such as, for example, Screened Poisson Surface Reconstruction. The mesh or meshes of the set of teeth 10 are subtracted from the closed mesh of the gingiva 12, for example with a Boolean difference, thereby providing cavities 13' as shown in Figure 17.

When there is excess gingiva 12 caused by the generation of the closed mesh, the resulting mesh of, e.g., Figure 17, may be removed by removing faces therefrom. The removal may be performed by means of digital processing or manually by a user. Concerning the former, the digital processing may cause removal of the faces

The resulting model or models 1 of teeth 10 and gingiva 12 may have meshes for each tooth 10 and the gingiva 12, or have a single mesh integrating the teeth 10 and the gingiva.

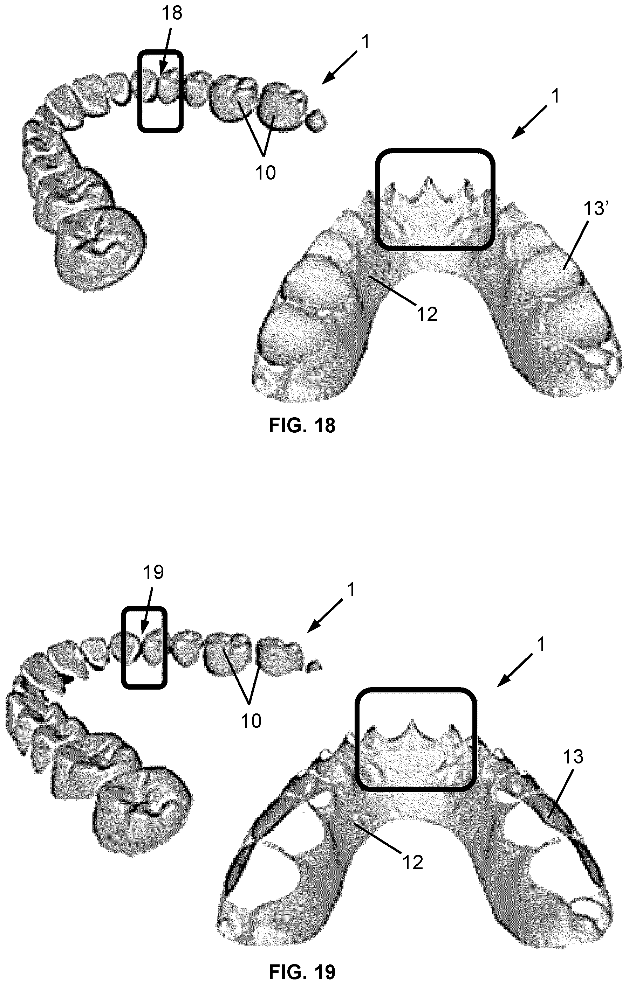

Figure 18 shows at least one model 1 of at least part of a mouth with pontic model. As part of the method of some embodiments, the completion of the denture with reconstruction of crowns may be conducted such that the pontic is provided. In this case, the model or models 1 include all reconstructed components.

Conversely, like in Figure 19, the reconstruction is carried out in some embodiments such as no pontic is provided, thereby corresponding to the original model but with accurate estimation of any occluded and/or missing surface. In this case, faces that overlap with each other are removed from both the gingiva 12 and teeth 10.

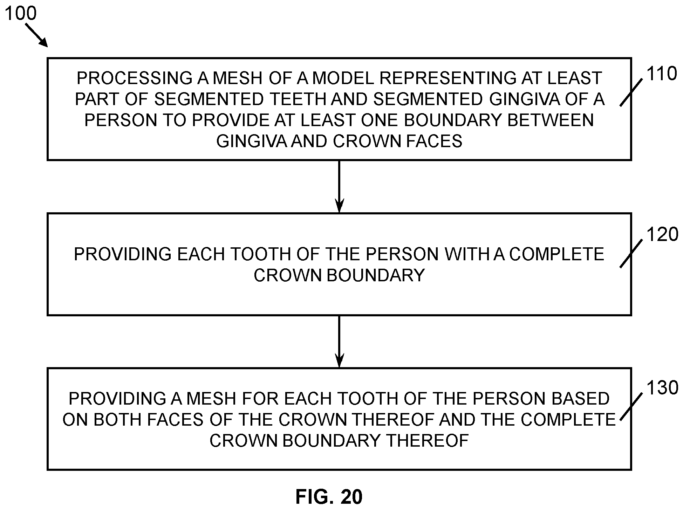

Figure 20 shows a method 100 in accordance with some embodiments.

The method 100 includes a step whereby a computing device or system providing 110 one or more boundaries between gingiva and crowns of the teeth of a person as represented by a mesh of a model. The one or more boundaries are provided 110 by processing the mesh accordingly.

The method 100 also includes a step whereby the same or a different computing device or system provides 120 each tooth of the person with a complete crown boundary in the mesh. To do so, the computing device or system determines at least part of a boundary between each tooth and the gingiva and identifies whether there is at least one occluded and/or missing surface for the respective tooth that makes part of the boundary between the tooth and the gingiva to be missing. Also, the computing device or system estimates for each tooth in such situation, i.e., with part of the boundary being missing, the part of the boundary that is missing.

The method 100 also includes a step whereby the same or a different computing device or system provides 130 a mesh for each tooth of the person based on the faces of the respective crown and also based on the complete crown boundary, i.e., including the estimated part of the boundary that was missing.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

Such variations of the subject matter may be referred to herein, individually or collectively, by the term "embodiment" or "example" merely for convenience and without intending to voluntarily limit the scope of this application to any single example or concept if more than one is in fact disclosed. Thus, although specific examples have been illustrated and described herein, it should be appreciated that any arrangement calculated to achieve the same purpose may be substituted for the specific examples shown. This disclosure is intended to cover any and all adaptations or variations of various examples. Combinations of the above embodiments or examples, and other examples not specifically described herein, will be apparent to those of skill in the art upon reviewing the above description.

Words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance. As used herein, the conjunction "or" refers to a non-exclusive "or," unless specifically stated otherwise.

Although some embodiments may include a particular sequence of operations, the sequence may in some cases be altered without departing from the scope of the present disclosure. For example, some of the operations may be performed in parallel or in a different sequence that does not materially affect the functions as described in the examples. In other examples, different components of an example device or system that implements an example method may perform functions at substantially the same time or in a specific sequence.

As used herein, the terms "processor", "processing device" and "computing device" may refer to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof. A processor may be a multi-core processor having two or more independent processors (sometimes referred to as "cores") that may execute instructions contemporaneously. Multi-core processors may contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. A processor may be emulated in software, running on a physical processor, as a virtual processor or virtual circuit. The virtual processor may behave like an independent processor but is implemented in software rather than hardware.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules/components that operate to perform one or more operations or functions. The modules/components referred to herein may, in some examples, comprise processor-implemented modules/components.

Similarly, the methods described herein may be at least partially processor-implemented. For example, at least some of the operations of a method may be performed by one or more processors or processor-implemented modules/components. The performance of certain of the operations may be distributed among the one or more processors, not only residing within a single machine, but deployed across a number of machines. In some examples, the processor or processors may be located in a single location (e.g., within a home environment, an office environment, or a server farm), while in other examples the processors may be distributed across a number of locations.

## Claims

1. A computer-implemented method (100), comprising:
providing (110) at least one boundary (20,22) between gingiva (12) and crown (11) faces by processing a mesh of a model (1) that represents at least part of both segmented teeth (10) and at least part of segmented gingiva of a person;
providing (120), in the mesh, each tooth of the person with a complete crown boundary (30) by:
determining at least part of a boundary between each tooth and the gingiva and identifying, for the respective tooth, whether there is at least one occluded and/or missing surface (14,16) with part of a boundary between the tooth and the gingiva missing; and
estimating, for each tooth having the at least one occluded and/or missing surface with part of the missing boundary, the part of the missing boundary; and
providing (130) a mesh for each tooth of the person based on both faces of the crown thereof and the complete crown boundary thereof.

2. The computer-implemented method (100) of claim 1, wherein estimating the part of the missing boundary comprises providing a directed graph (40) with a point (44) per face of a portion at an end of the respective crown (11) and a point (42) per face of a portion of a gingiva (12) adjacent to the respective crown (11), where each point per face of the portion of the crown is connected to a nearest neighboring point of a face of the crown or gingiva via a directed edge; wherein the point per face of the portion of the crown and/or the portion of the gingiva is optionally a barycenter of the respective face.

3. The computer-implemented method (100) of any one of the preceding claims, wherein providing (110) the at least one boundary (20,22) comprises:
providing at least one boundary face (20) by processing the mesh to identify, in the mesh, a boundary between gingiva (12) and crown (11) faces;
providing at least one contour face (21) by processing the mesh to identify crown faces with a curvature greater than a predetermined curvature threshold; and
providing at least one gingiva face (22) by intersecting the at least one boundary face and the at least one contour face.

4. The computer-implemented method (100) of claim 3, wherein providing (110) the at least one boundary face (20,22) further comprises: dilating the identified boundary (20,22) between the gingiva (12) and the crown (11) faces a predetermined and configurable depth.

5. The computer-implemented method (100) of any one of the preceding claims, wherein providing (130) the mesh for each tooth (10) of the person comprises:
connecting at least one point (32,34) per face at an end of the crown (11) with either an adjacent point per face at the end of the crown or the estimated part of the missing boundary to form a closed boundary (30);
providing a point cloud (50) for each tooth (10) with at least one point (52) per face of the crown and covering at least part of the closed boundary; and
providing the mesh for each tooth based on the respective point cloud.

6. The computer-implemented method (100) of claim 5, wherein the at least one point (32,34) per face of the crown (11) comprises a barycenter of the face.

7. The computer-implemented method (100) of any one of claims 5-6, wherein providing (130) the mesh for each tooth (10) of the person further comprises processing the point cloud (50) with a neural network configured to provide a crown point cloud with points on the part of the missing boundary.

8. The computer-implemented method (100) of claim 7, wherein providing (130) the mesh for each tooth (10) of the person further comprises:
centering the point cloud (50) based on a mean value of all points (52) of the point cloud;
scaling each point of the point cloud for normalized representation by applying a scaling factor based on a mean norm of the points of the point cloud, the mean norm optionally being a mean Euclidean norm;
descaling the crown point cloud with greater number of points by applying an inverse of the scaling factor; and
decentering the crown point cloud with greater number of points based on the mean value used for centering the point cloud;
wherein the point cloud processed with the neural network is the scaled point cloud; and
wherein the mesh provided for each tooth is based on the respective crown point cloud with points on the part of the missing boundary after descaling and decentering.

9. The computer-implemented method (100) of any one of claims 5-8, wherein providing the mesh for each tooth (10) of the person further comprises processing the point cloud (50) to provide faces between different points (52), thereby providing the mesh; wherein the provision of faces is conducted such that a pontic shape is provided.

10. The computer-implemented method (100) of any one of the preceding claims, further comprising removing and/or narrowing, in the mesh, boundary faces between adjacent teeth (10) when the model (1) does not include segmented interproximal surfaces (16) between adjacent teeth (10).

11. The computer-implemented method (100) of any one of the preceding claims, further comprising removing portions (18) of adjacent teeth (10) that are overlapping by processing each pair of adjacent segmented teeth to subtract, from a mesh of one tooth of the pair of teeth, an overlapping portion between the pair of teeth.

12. The computer-implemented method (100) of any one of the preceding claims, further comprising estimating alveolar models for each segmented teeth when the mesh of the model (1) contains a base or a cast.

13. The computer-implemented method (100) of any one of the preceding claims, further comprising conducting a dental treatment process based on the provided mesh for one or more teeth (10) of the person.

14. A method of manufacturing one or more dental objects, comprising:
a method (100) according to claim 13;
providing data for manufacturing the one or more dental objects as part of the dental treatment process; and
manufacturing the one or more dental objects at least based on the provided data by additive or subtractive manufacturing.

15. A computing device or system comprising means for carrying out a method according to any one of claims 1-13.
